# EUROPÄISCHE PATENTSCHRIFT

(11) **EP 2 746 820 B1**
(45) Veröffentlichungstag und Bekanntmachung des Hinweises auf die Patenterteilung: **26.08.2020**
(21) Anmeldenummer: 12198338.1
(22) Anmeldetag: 20.12.2012
(51) Int. Cl.: G01V 8/14, G01V 8/22

(54) **Optischer Sensor**
Optical sensor
Capteur optique

(43) Veröffentlichungstag der Anmeldung: 25.06.2014
(73) Patentinhaber: Leuze electronic GmbH + Co KG, 73277 Owen/Teck (DE)
(72) Erfinder: Lohmann, Lutz, 82140 Olching (DE)
(74) Vertreter: Ruckh, Rainer Gerhard

(56) Entgegenhaltungen:
- EP-A1- 1 939 652
- DE-A1- 19 938 639
- DE-U1- 29 924 385
- DE-U1-202006 012 351
- DE-U1-202007 001 907
- US-A1- 2002 061 134

## Beschreibung

Die Erfindung betrifft einen optischen Sensor zur Erfassung von Objekten innerhalb eines Schutzfelds.

Derartige optische Sensoren können typischerweise als Lichtvorhänge ausgebildet sein, die nach dem Reflexionslichtschrankenprinzip arbeiten. Diese Lichtvorhänge weisen als aktive Sensorelemente an einen ersten Rand des Schutzfelds angeordnete Sender-/Empfängerpaare auf, die mit einer Auswerteeinheit in einem gemeinsamen Gehäuse integriert sind. Jedes Sender-/Empfängerpaar umfasst einen Sender als punktförmige Lichtquelle, welcher Lichtstrahlen emittiert. Der Sender ist von einer Leuchtdiode oder dergleichen gebildet. Der Lichtstrahlen empfangende Empfänger des Sender-/Empfängerpaares besteht aus einer Photodiode. An einem dem ersten Rand gegenüberliegenden Rand des Schutzfelds befindet sich ein Retroreflektor. Bei freiem Schutzfeld werden die von den Sendern emittierenden Lichtstrahlen mit vorzugsweise parallel in Abstand zueinander laufenden Strahlachsen zum Retroreflektor geführt, dort in sich selbst zurückreflektiert und dann zum Empfänger des jeweiligen Streitpatents geführt. Die dadurch generierten Empfangssignale der Empfänger werden in der Auswerteeinheit zur Generierung eines Objektfeststellungssignals ausgewertet. Ein in das Schutzfeld eindringendes Objekt wird dadurch erkannt, dass das Objekt den Retroreflektor abschattet, so dass zumindest die Lichtstrahlen eines Senders nicht mehr zum Retroreflektor gelangen sondern vom Objekt zum Empfänger des Sender-/Empfängerpaares zurückreflektiert werden. Die sich dadurch gegenüber einem freien Strahlengang ergebende Amplitudenänderung des Empfängersignals des Empfängers wird in der Auswerteeinheit erfasst.

Typischerweise werden derartige Lichtvorhänge im Bereich der Sicherheitstechnik, beispielsweise für den Personenschutz an gefahrenbringenden Anlagen eingesetzt. Zur Erzielung des hierfür erforderlichen Sicherheitsniveaus weist die Auswerteeinheit einen mehrkanaligen Aufbau, beispielsweise in Form zweier sich zyklisch gegenseitig überwachender Rechnereinheiten auf.

Eine in der Sicherheitsnorm IEC 61496-2 definierte Anforderung ist die sichere Unterscheidung des Retroreflektors von Objekten. Zur Erfüllung dieser Anforderung ist der Abstand des Retroreflektors zu den einzelnen Sender-/Empfängerpaaren zu überwachen. Diese Abstandskontrolle erfordert einen beträchtlichen Hardwareaufwand und führt somit zu unerwünscht hohen Herstellkosten des Lichtvorhangs.

Ein weiterer Nachteil derartiger Lichtvorhänge besteht darin, dass die Erfassung von kleinen Objekten problematisch sein kann, da die Sender-/Empfängerpaare diskrete, in Abstand zueinander angeordnete Sensorelemente bilden, ist die Auflösung des Lichtvorhangs durch diese Abstände begrenzt. Die Abstände der Sender-/Empfängerpaare können zwar bis zu einem gewissen Grad verringert werden, in dem eine besonders hohe Anzahl von Sender-/Empfängerpaaren vorgesehen wird. Eine derartig hohe Anzahl von Sender-/Empfängerpaaren führt jedoch wieder zu einer Erhöhung der Herstellkosten des Lichtvorhangs.

Die DE 199 38 639 A1 betrifft eine Vorrichtung zur Absicherung eines Gefahrenbereichs, insbesondere des Gefahrenbereichs einer automatisiert arbeitenden Maschine. Die Vorrichtung besitzt erste Mittel zum Erzeugen einer optisch überwachten, virtuellen Barriere sowie zweite Mittel zum Erzeugen eines Schaltsignals zum Anhalten der Maschine bei einem Durchbrechen der Barriere. Die Vorrichtung ist dadurch gekennzeichnet, dass die ersten Mittel eine Bildaufnahmeeinheit sowie ein definiertes Ziel aufweist, dessen Abbild die Bildaufnahmeeinheit aufnimmt. Desweiteren besitzen die zweiten Mittel eine Vergleichseinheit, die das aufgenommene Abbild mit einer für ein Referenzbild charakteristischen Größe vergleicht.

Die DE 20 2007 001 907 U1 betrifft eine Reflektorkamera mit einem Lichtsender zum Aussenden von Lichtstrahlen in einen Überwachungsbereich, einem am Ende des Überwachungsbereiches angeordneten Reflektor zur Rückreflexion der auftreffenden Lichtstrahlen und einem Empfangsobjektiv mit einem Lichtempfänger zum Empfangen des zurückreflektierten Lichtes und zur Ausgabe eines von der auftreffenden Lichtmenge abhängigen Empfangssignales. Das Empfangsobjektiv ist ein Weitwinkelobjektiv, das einen nicht rotationssymmetrischen Öffnungswinkel aufweist. In der Richtung des geringen Öffnungswinkels des Empfangsobjektivs ist unmittelbar neben dem Empfangsobjektiv mindestens ein Lichtsender angeordnet.

Die EP 1 939 652 A1 betrifft einen Objektfeststellungssensor zur Überwachung eines Schutzbereiches auf die Anwesenheit eines Objekts, mit einem Bildaufnehmer, wenigstens einer ersten vor dem Bildaufnehmer angeordneten Reihe aus Mikrolinsen, die derart angeordnet sind, dass auf dem Bildaufnehmer von den einzelnen Mikrolinsen erzeugte Subbilder räumlich versetzt zueinander abgebildet werden, und einer Auswerteeinheit zur Auswertung eines von dem Bildaufnehmer empfangenen Bildes auf Abweichungen von einem Sollsignal, wobei die Auswerteeinheit ausgestaltet ist, die einzelnen Subbilder zur Steigerung der Auflösung zu verwerten.

Die DE 299 24 385 U1 betrifft eine optoelektronische Vorrichtung zum Erfassen von Objekten in einem Überwachungsbereich mit einem Sendelichtstrahlen emittierenden Sender und einem Empfangslichtstrahlen empfangenden Empfangselement, wobei zur Erfassung des Objekts die auf das Empfangselement auftreffende Lichtmenge der Empfangslichtstrahlen in einer Auswerteeinheit bewertet wird. Das Empfangselement ist in mehrere Segmente aufgeteilt. Zur Justage der optoelektronischen Vorrichtung wird jeweils die Lichtmenge der auf ein Segment auftreffenden Empfangslichtstrahlen ermittelt. Die relative Verteilung der Lichtmengen auf den Segmenten wird mittels einer an einer Außenseite der optoelektronischen Vorrichtung angeordneten Anzeigeeinheit dargestellt.

Die DE 20 2006 012 351 U1 betrifft einen optischen Sensor zur Überwachung einer Schutzzone an einem Arbeitsmittel, mit einer Lichtempfangseinheit zur Erfassung von Objekten innerhalb der Schutzzone und einer Auswerteeinheit, in welcher durch Auswertung von mit der Lichtempfangseinheit registrierten Objektmerkmalen eine Unterscheidung von sicherheitskritischen Objekten und nichtsicherheitskritischen Objekten durchführbar ist, wobei bei Erfassen eines sicherheitskritischen Objekts in der Schutzzone eine Objektmeldung generiert wird und bei Erfassen eines nichtsicherheitskritischen Objekts in der Schutzzone wenigstens ein Bereich dieser Schutzzone überbrückbar ist, so dass ein Eindringen eines Objekts in diesen überbrückten Bereich nicht zur Generierung einer Objektmeldung führt.

Der Erfindung liegt die Aufgabe zugrunde, einen optischen Sensor der eingangs genannten Art bereitzustellen, mittels dessen bei geringem konstruktiven Aufwand eine sichere und umfassende Objekterfassung innerhalb eines Schutzfelds ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor zur Erfassung von Objekten innerhalb eines Schutzfelds mit einer eine Lichtlinie erzeugenden Beleuchtungseinheit, sowie wenigstens einer der Beleuchtungseinheit zugeordneten, einen Empfänger bildenden Kamera an einem ersten Rand des Schutzfelds, und einem an einem zweiten Rand des Schutzfelds angeordneten Reflektor. Mit einer Auswerteeinheit wird in Abhängigkeit von Empfangssignalen des Empfängers ein Objektfeststellungssignal generiert. Der Reflektor weist ein Reflektormuster aus spiegelnd reflektierenden Segmenten und lichtabsorbierenden Segmenten auf. Bei freiem Schutzfeld trifft die Lichtlinie der Beleuchtungseinheit auf das Reflektormuster des Reflektors auf. Von den spiegelnd reflektierenden Segmenten wird das Licht der Lichtline zur wenigstens einen Kamera geführt. Der Empfänger ist dazu ausgebildet, dass in verschiedenen Abständen des Reflektors dessen Reflektormuster vollständig auf die wenigstens eine Kamera des Empfängers abgebildet wird. Die wenigstens eine Kamera weist einen Teil des Schutzfelds abdeckenden Sichtbereich auf. Ein reflektierendes Objekt innerhalb des Sichtbereichs wird dadurch erfasst, dass an diesem reflektiertes Licht der Beleuchtungseinheit direkt auf die mindestens eine Kamera geführt ist. Ein nicht reflektierendes Objekt wird innerhalb des Sichtbereichs dadurch erfasst, dass dieses die Lichtlinie der Beleuchtungseinheit unterbricht, so dass nicht mehr von allen spiegelnden reflektierenden Segmenten des Reflektors Licht zur mindestens einen Kamera geführt wird. Ein reflektierendes oder nicht reflektierendes Objekt, dass außerhalb des Sichtbereichs jedoch innerhalb des Schutzfelds angeordnet ist, wird dadurch erfasst, dass dieses die Lichtline der Beleuchtungseinheit unterbricht, so dass nicht mehr von allen spiegelnd reflektierenden Segmenten des Reflektors Licht zur mindestens einer Kamera geführt wird. Der optische Sensor ist ein Sicherheitssensor, dessen Auswerteeinheit und dessen Empfänger einen mehrkanaligen Aufbau aufweisen, wobei ein mehrkanaliger Empfänger wenigstens zwei Kameras aufweist, die denselben Sichtbereich überwachen.

Durch die flächige Ausleuchtung des Schutzfelds mit der von der Beleuchtungseinheit generierten Lichtlinie und die Abbildung der spiegelnden Segmente des Reflektors durch diese Lichtlinie auf den von wenigstens einer Kamera gebildeten Empfänger wird eine sichere Objekterfassung innerhalb des gesamten Schutzfelds erzielt.

Wesentlich hierbei ist, dass eine Objektdetektion nicht nur innerhalb sondern auch außerhalb des Sichtfelds der wenigstens einen Kamera ermöglicht wird. Dadurch reicht im einfachsten Fall bereits eine einzige, vorzugsweise im Bereich des Zentrums der Beleuchtungseinheit positionierte Kamera zur Objekterfassung aus. Vorteilhaft können auch zwei Kameras aus den längsseitigen Enden der Beleuchtungseinheit, das heißt in den Ecken des Schutzfelds positionierte Kameras zur Objektdetektion vorgesehen sein.

In jedem Fall reicht eine geringe Anzahl aktiver Sensorkomponenten zur Objekterfassung innerhalb des gesamten Schutzfelds aus.

Das Prinzip der Objekterkennung beruht dabei allgemein darauf, dass in der Auswerteeinheit geprüft wird, ob das Reflektormuster vollständig erkannt wird oder nicht. Dabei liegt ein freies Schutzfeld vor, wenn das Reflektormuster des Reflektors in der Auswerteeinheit vollständig erkannt wird und ein Objekteingriff im Schutzfeld vor, wenn das Reflektormuster in der Auswerteeinheit nicht erkannt wird.

Vorteilhaft wird bei freiem Schutzfeld das auf den Empfänger abgebildete Reflektormuster des Reflektors in einem Einlernvorgang ein Referenzbild beziehungsweise aus dem Referenzbild abgeleitete Referenzmerkmale eingelernt, welche von den auf den Reflektor abgebildeten reflektierenden Segmenten des Reflektors gebildet ist. Während eines auf den Einlernvorgang folgenden Arbeitsbetriebs zur Objekterfassung werden aktuelle Bilder des Empfängers mit dem Referenzbild verglichen.

Bei der Objekterkennung von Objekten innerhalb des Sichtbereichs der wenigstens einen Kamera wird unterschieden, ob es sich um reflektierende oder nicht reflektierende Objekte handelt.

Reflektierende Objekte werden dadurch erfasst, in dem das von diesen Objekten reflektierte Licht der Beleuchtungseinheit, welches auf die wenigstens eine Kamera geführt wird, ausgewertet wird.

Die Objektdetektion von nicht reflektierenden Objekten erfolgt dadurch, dass diese das Licht der Beleuchtungseinheit unterbrechen, was in der wenigstens einen Kamera dadurch registriert wird, dass nicht mehr von allen spiegelnd reflektierenden Segmenten des Reflektors Licht auf die wenigstens eine Kamera geführt wird.

Die Objektdetektion von Objekten innerhalb des Schutzfelds, jedoch außerhalb des Sichtfelds erfolgt unabhängig davon, ob diese Objekte reflektierend oder nicht dadurch, dass durch die Unterbrechung der Lichtlinie durch das Objekt nicht mehr von allen spiegelnd reflektierenden Segmenten des Reflektors Licht auf die wenigstens eine Kamera geführt wird.

Ein wesentlicher Vorteil des erfindungsgemäßen optischen Sensors besteht darin, dass dieser für unterschiedliche Abstände des Reflektors zu den von der Beleuchtungseinheit und der oder den Kameras gebildeten Sensorkomponenten eingesetzt werden kann. Dies beruht darauf, dass der aus wenigstens einer Kamera und einem Kameraobjektiv gebildete Empfänger des optischen Sensors so ausgebildet ist, dass das Reflektormuster für unterschiedliche Abstände des Reflektors vollständig auf die oder jede Kamera abgebildet wird. Dadurch können durch eine Abstandsvariation des Reflektors auf einfache Weise unterschiedlich große Schutzfelder vorgegeben werden, so dass eine flexible applikationsspezifische Anpassung des optischen Sensors möglich wird.

Gemäß der Erfindung ist jeder Kamera ein Kameraobjektiv in Form eines Weitwinkelobjektivs vorgeordnet. Jede Kamera weist eine matrixförmige Anordnung von Empfangselementen derart auf, dass die Auflösung der Kamera in ihren Außenbereichen geringer als in ihrem zentralen Bereich ist.

Die erhöhte Auflösung der Kamera in ihrem zentralen Bereich wird dadurch erhalten, dass dort im Vergleich zu den Außenbereichen der Kamera mehr Empfangselemente pro Flächeneinheit vorgesehen sind. Damit wird dem Umstand Rechnung getragen, dass ein Reflektor im Nahbereich mit einer relativ großen Bildgröße auf dem Außenbereich der Kamera abgebildet wird, während ein Reflektor im Fernbereich mit einer kleinen Bildgröße im Zentrum der Kamera abgebildet wird. Um auch in diesem Fall das Reflektormuster des Reflektors noch vollständig erfassen zu können weist die Kamera in ihrem Zentralbereich eine erhöhte Anzahl von Empfangselementen pro Flächeneinheit auf.

Gemäß einer zweiten Variante der Erfindung weist jede Kamera eine gleichförmige matrixförmige Anordnung von Empfangselementen auf. Jeder Kamera ist ein Kameraobjektiv zugeordnet, welches mehrere Zonen mit unterschiedlichen Brennweiten aufweist.

Die Zonen des Kameraobjektivs sind so ausgebildet, dass das Reflektormuster auch bei unterschiedlichen Reflektorabständen vollständig auf der Kamera abgebildet und von dieser erfasst werden kann.

Gemäß einer ersten Ausführungsform ist jedes Kameraobjektiv von einer Optik mit mehreren Zonen unterschiedlicher Brennweiten zur Generierung von unterschiedlichen Öffnungswinkeln gebildet.

Gemäß einer zweiten Ausführungsform ist jedes Kameraobjektiv von einem Mikrolinsenarray gebildet, welches ebenfalls insgesamt unterschiedliche Öffnungswinkel aufweist.

Gemäß einer besonders vorteilhaften Ausgestaltung der Erfindung werden Bilder des Reflektors oder von Objekten in unterschiedlichen Abständen zu jeder Kamera auf unterschiedliche Bereiche der matrixförmigen Anordnung von Empfangselementen der Kamera abgebildet.

Dadurch wird eine erhöhte Resistenz des optischen Sensors gegen Einflüsse vor Stör- und Umgebungslicht erhalten. Da die Bilder des Reflektors abstandsabhängig auf verschiedene Bereiche der Kamera abgebildet werden, können Störlichteinstrahlungen von Lichtquellen, die sich in einem vom Reflektor unterschiedlichen Abstand befinden, eindeutig vom Reflektormuster unterscheiden, da das Störlicht einerseits und das Reflektormuster auf unterschiedliche Kamerabereiche abgebildet werden. Damit können derartige Störlichtstrahlungen eindeutig von Reflektorsignalen unterbrochen werden, wodurch Fehldetektionen aufgrund der Störlichteinstrahlungen vermieden werden können. Gemäß einer weiteren vorteilhaften Ausgestaltung der Erfindung werden in einem Einlernvorgang durch Abbildungsfehler bedingte Bildverzerrungen von auf jede Kamera abgebildeten Bildern oder von daraus abgeleiteten Merkmalen erfasst und in der Auswerteeinheit rechnerisch kompensiert. Dadurch wird eine erhöhte Genauigkeit des optischen Sensors bei der Objektdetektion erzielt.

Gemäß einer vorteilhaften Ausführungsform der Erfindung weist zur Erhöhung der Tiefenschärfe bei der Bilderfassung die wenigstens eine Kamera beziehungsweise das Kameraobjektiv Kodierungsmittel auf, mittels derer sind Richtungslagen des einfallenden Lichts auf bestimmte Flächen der Kamera bestimmbar. Diese Richtungslagen bilden Eingangsgrößen für einen in der Auswerteeinheit implementierten Lichtfeld-Algorithmus (EDoF = extended depth of field).

Auch diese Maßnahme führt zu einer erhöhten Genauigkeit bei der Objektdetektion.

Gemäß einer vorteilhaften Ausgestaltung der Erfindung sind Ausrichtmittel vorgesehen, mittels derer die Beleuchtungseinheit und die wenigstens eine Kamera relativ zum Reflektor justiert werden.

Die dadurch erzielte genaue Ausrichtung des Reflektors auf die Sensorkomponenten ist eine wesentliche Voraussetzung für die korrekte Erfassung des Reflektormusters und die darauf basierende Objekterfassung im Schutzfeld.

Besonders vorteilhaft als Ausrichtmittel sind wenigstens ein Ausrichtlaser und eine Markierung vorgesehen, welche der Beleuchtungseinheit und der Kamera zugeordnet sind. Das vom Ausrichtlaser emittierte Laserlicht wird vom Reflektor reflektiert und ist auf die Markierung geführt, wo dieses Laserlicht sichtbar ist.

Besonders zweckmäßig befindet sich an jedem Ende der Beleuchtungseinheit ein Ausrichtlaser und eine neben diesem angeordnete Markierung. Das von beiden Ausrichtlasern emittierte Laserlicht wird bei korrekter Justage des Reflektors von diesem zurückreflektiert und trifft dann auf die Markierung neben dem jeweiligen Ausrichtlaser. Die korrekte Justage kann von einer Bedienperson durch die vorzugsweise mittige Abbildung des Laserlichts auf der jeweiligen Markierung visuell kontrolliert werden.

Für den Fall, dass die Ausrichtlaser sichtbares Laserlicht emittieren, besteht die Markierung vorteilhaft aus einem lichtverstärkendem Material, insbesondere aus einer reflektierenden Fläche, so dass dort das Laserlicht gut sichtbar ist.

Für den Fall, dass die Ausrichtlaser nicht sichtbares Laserlicht, beispielsweise Infrarotlicht, emittieren, sind Markierungen vorgesehen, die das Laserlicht in den sichtbaren Wellenlängenbereich verschieben, so dass auch in diesem Fall das Laserlicht auf den Markierungen gut sichtbar ist. Vorteilhaft bestehen dann die Markierungen aus fluoreszierendem Material.

Ein wesentlicher Vorteil der Erfindung besteht weiterhin darin, dass auch für den Einsatz des optischen Sensors an sicherheitstechnischen Anwendungen die Reflektorposition nicht mehr bestimmt oder überwacht werden muss. Die Reflektorüberwachung erfolgt vielmehr allein durch die Überwachung, ob das Reflektormusters in der wenigstens einen Kamera korrekt erkannt wird, wobei das Reflektormuster in der Auswerteeinheit ortsaufgelöst ausgewertet wird.

Gemäß einer vorteilhaften Ausgestaltung der Erfindung erzeugt die Beleuchtungseinheit des optischen Sensors eine kontinuierliche, unterbrochene Lichtlinie. Alternativ kann mit der Beleuchtungseinheit auch eine komplexere Lichtlinie derart erzeugt werden, dass viele aneinander gereihte Muster die Lichtlinie bilden.

Die Sender der Beleuchtungseinheit können generell sichtbares Licht oder unsichtbares Licht, insbesondere Infrarotlicht emittieren.

Generell können die Beleuchtungseinheit und die Kamera beziehungsweise die Kameras separate Einheiten bilden. Alternativ können diese auch zu einer Geräteeinheit zusammengefasst sein.

Gemäß einer besonders vorteilhaften Ausgestaltung der Erfindung ist dieser ein Sicherheitssensor, dessen Auswerteeinheit und/oder dessen Empfänger einen mehrkanaligen Aufbau aufweist.

Der so ausgebildete Sicherheitssensor kann dann im Bereich der Sicherheitstechnik, insbesondere für den Personenschutz von gefahrbringenden Maschinen und Anlagen eingesetzt werden.

Durch einen mehrkanaligen Aufbau des Empfängers können die SicherheitsAnforderungen an die durchgeführten Überwachungen erfüllt werden. Generell umfasst ein mehrkanaliger Empfänger wenigstens zwei Kameras, die denselben Sichtbereich überwachen. Dies kann beispielsweise durch optische Umlenkmittel realisiert werden, die den Kameras vorgeordnet sind. Die mit den Kameras aufgenommenen Bilder oder Merkmale desselben Sichtbereichs werden dann zur Aufdeckung von Fehlern des Sicherheitssensors fortlaufend miteinander verglichen.

Besonders vorteilhaft sind Mittel zur Testung der wenigstens einen Kamera vorgesehen.

Dadurch wird die Fehlersicherheit des optischen Sensors weiter erhöht, was insbesondere bei der Ausbildung des optischen Sensors als Sicherheitssensor vorteilhaft ist.

Vorteilhaft werden zur Testung der wenigstens einer Kamera mit dieser aufgenommene Bilder bei ausgeschalteten Sendern oder bei Projektion eines Lichtmusters in den Sichtbereich der Kamera oder bei Erzeugung eines der Lichtlinie aufgeprägten, sich zeitlich ändernden Testmusters in der Auswerteeinheit ausgewertet.

In jedem Fall werden die bei der Testung ermittelten Bilder oder Merkmale mit bestimmten Sollwerten, die Erwartungswerte für den fehlerfreien Fall definieren, verglichen, um so die Funktion der jeweiligen Kamera zu testen.

Gemäß einer weiteren vorteilhaften Ausführungsform weist der optische Sensor Mittel zur Unterdrückung von Störlichteinstrahlungen auf.

Gemäß einer ersten Variante können Störlichteinflüsse dadurch unterdrückt werden, dass ein Kamerabild zunächst bei ausgeschalteter Beleuchtungseinheit aufgenommen wird, wobei im Anschluss daran ein Kamerabild bei eingeschalteter Beleuchtungseinheit aufgenommen wird und dann die Differenz beider Kamerabilder gebildet wird.

Eine weitere Möglichkeit der Störlichtunterdrückung besteht darin, dass das Licht der Beleuchtungseinheit moduliert oder getaktet wird und der Empfänger darauf synchronisiert wird.

Die Erfindung wird im Folgenden anhand der Zeichnungen erläutert. Es zeigen:
- Figur 1:: Erstes Ausführungsbeispiel eines optischen Sensors, der nicht Teil der Erfindung ist.
- Figur 2:: Erste Variante einer Beleuchtungseinheit für den optischen Sensor gemäß Figur 1.
- Figur 3:: Zweite Variante einer Beleuchtungseinheit für den optischen Sensor gemäß Figur 1.
- Figur 4:: Einzeldarstellung des Reflektors des optischen Sensors gemäß Figur 1.
- Figur 5:: Variante des Reflektors gemäß Figur 4.
- Figur 6a)-c):: Kamerabilder bei unterschiedlichen Objektdetektionen mit dem optischen Sensor gemäß Figur 1.
- Figur 7:: Zweites Ausführungsbeispiel des erfindungsgemäßen optischen Sensors.
- Figur 8:: Variante der Ausführungsform gemäß Figur 7.
- Figur 9:: Ausführungsform gemäß Figur 7 mit Mitteln zur Testung der Kamera.
- Figur 10:: Variante der Mittel zur Testung einer Kamera des optischer Sensors.
- Figur 11:: Ausführungsbeispiel einer Kamera mit vorgeordnetem Kameraobjektiv für einen optischen Sensor gemäß den Figuren 1 bis 10.
- Figur 11a:: Draufsicht auf die lichtempfindliche Fläche der Kamera der Anordnung gemäß Figur 11.

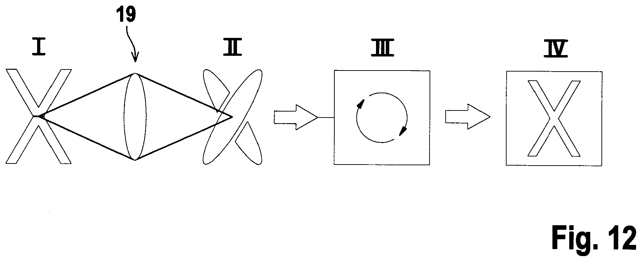

- Figur 12:: Schematische Darstellung einzelner Schritte zur Erhöhung der Tiefenschärfe des erfindungsgemäßen optischen Sensors nach dem Lichtfeld-Prinzip.

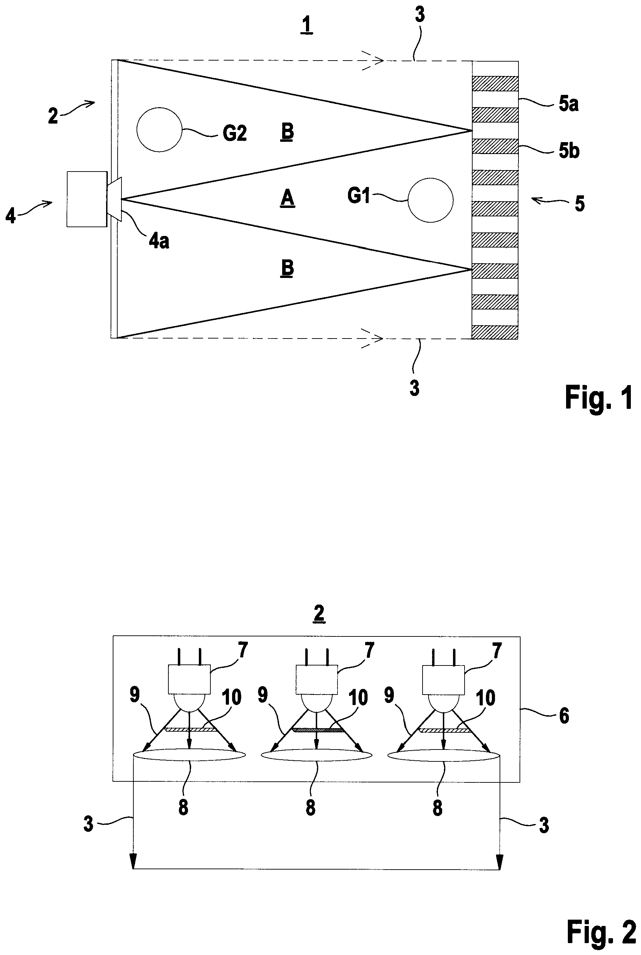

Figur 1 zeigt ein erstes Ausführungsbeispiel eines optischen Sensors 1, der nicht Teil der Erfindung ist. Der optische Sensor 1 umfasst als aktive Sensorkomponente eine Beleuchtungseinheit 2, die eine Lichtlinie 3 erzeugt und als Empfänger eine Kamera 4 mit einem vorgeordneten Kameraobjektiv 4a. Diesen Sensorkomponenten ist eine nicht dargestellte Auswerteeinheit zugeordnet. Diese Einheiten bilden vorteilhaft eine Geräteeinheit, die beispielsweise in einem nicht dargestellten Gehäuse integriert ist. Die aktiven Sensorkomponenten befinden sich an einem ersten Rand eines Schutzfelds, innerhalb dessen mit dem optischen Sensor 1 Objekte erfasst werden können. Am gegenüberliegenden Rand des Schutzfelds befindet sich ein Reflektor 5.

Der optische Sensor 1 bildet im vorliegenden Fall einen Sicherheitssensor. Zur Erfüllung der Sicherheitsanforderungen für den Einsatz des Sicherheitssensors im Bereich der Sicherheitstechnik weist die Auswerteeinheit einen mehrkanaligen, redundanten Aufbau auf. Im vorliegenden Fall besteht die Auswerteeinheit aus zwei sich gegenseitig zyklisch überwachenden Rechnereinheiten.

Die Kamera 4 besteht aus einer matrixförmigen Anordnung von lichtempfindlichen Empfangselementen. Die Kameras können als Mono- oder Multispektralkamera ausgebildet sein. In jedem Fall weist die Kamera 4 eine matrixförmige Anordnung von lichtempfindlichen Empfangselementen auf. Im vorliegenden Fall besteht die Kamera 4 aus einer CCD- oder CMOS Kamera 4.

Die Empfangssignale an den Ausgängen der Empfangssignale werden in der Auswerteeinheit zur Generierung eines Objektfeststellungssignals ausgewertet. Im vorliegenden Fall ist das Objektfeststellungssignal von einem binären Schaltsignal gebildet, dessen Schaltzustände angeben, ob sich ein Objekt im Schutzfeld befindet oder nicht. Mit dem Schaltsignal wird eine mit dem optischen Sensor 1 zu überwachende gefahrbringende Anlage gesteuert. Wird mit dem optischen Sensor 1 im Schutzfeld ein Objekt detektiert, wird durch das entsprechende Schaltsignal die Anlage abgeschaltet.

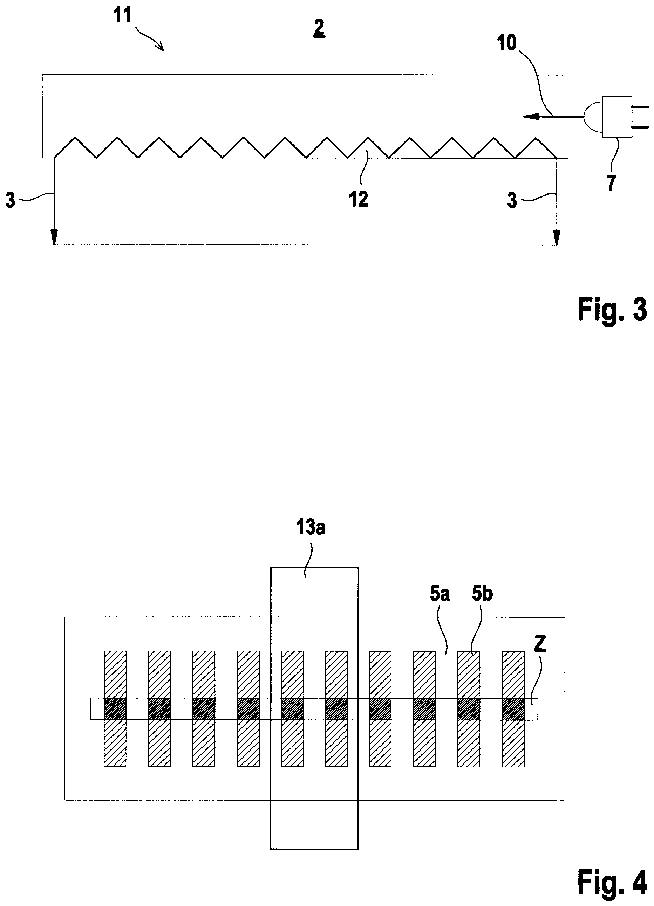

Die Figuren 2 und 3 zeigen zwei Ausführungsformen der Beleuchtungseinheit 2 für den optischen Sensor 1 gemäß Figur 1.

Bei der Ausführungsform gemäß Figur 2 umfasst die Beleuchtungseinheit 2 ein Sensorgehäuse 6, in dem mehrere Sender 7 mit jeweils einer nachgeordneten Sendeoptik 8 vorgesehen sind. Die Sender 7 sind von Laserdioden oder Leuchtdioden gebildet und emittieren Lichtstrahlen 9 im sichtbaren oder Infrarotbereich. Die Sendeoptiken 8 sind von Zylinderlinsen oder dergleichen gebildet. Mit diesen Sendeoptiken 8 wird aus den an den Sendern 7 punktförmig abgestrahlten Lichtstrahlen 9 eine geradlinig verlaufende und kontinuierliche, das heißt ununterbrochene Lichtlinie 3 erzeugt. Um dieser Lichtlinie 3 bestimmte Lichtmuster aufzuprägen, sind zwischen den Sendern 7 und den Sendeoptiken 8 optische Muster 17 wie zum Beispiel Gitterstrukturen angeordnet.

Die Beleuchtungseinheit 2 umfasst einen Lichtstab 11, an dessen einen längsseitigen Ende mittels eines Senders 7 Lichtstrahlen 9 eingekoppelt werden. Der Lichtstab 11 besteht aus lichtleitendem Material, so dass die Lichtstrahlen 9 in dessen Längsrichtung geführt werden. An einer Seitenfläche des Lichtstabs 11 sind über dessen gesamte Länge Auskoppelflächen 12 vorgesehen, die in Form von Aufrauungen oder Einkerbungen in dem Lichtstab 11 erzeugt werden. Dort treten die Lichtstrahlen 9 seitlich aus und bilden eine kontinuierliche, ununterbrochene Lichtlinie 3. Durch eine spezifische Ausbildung der Auskoppelflächen 12 können auch Lichtmuster innerhalb der Lichtlinie 3 erzeugt werden.

Der Reflektor 5 des optischen Sensors 1 ist als Spiegelreflektor ausgebildet und besteht, wie Figur 1 zeigt, aus einer alternierenden Folge von spiegelnd reflektierenden Segmenten 5a und lichtabsorbierenden Segmenten 5b, welche ein Reflektormuster bilden. An den spiegelnd reflektierenden Segmenten 5a wird das Licht der Lichtlinie 3 der Beleuchtungseinheit 2 spiegelnd, das heißt gerichtet reflektiert. An den lichtabsorbierenden Segmenten 5b wird das Licht der Lichtlinie 3 nicht oder nur in geringem Maße diffus reflektiert.

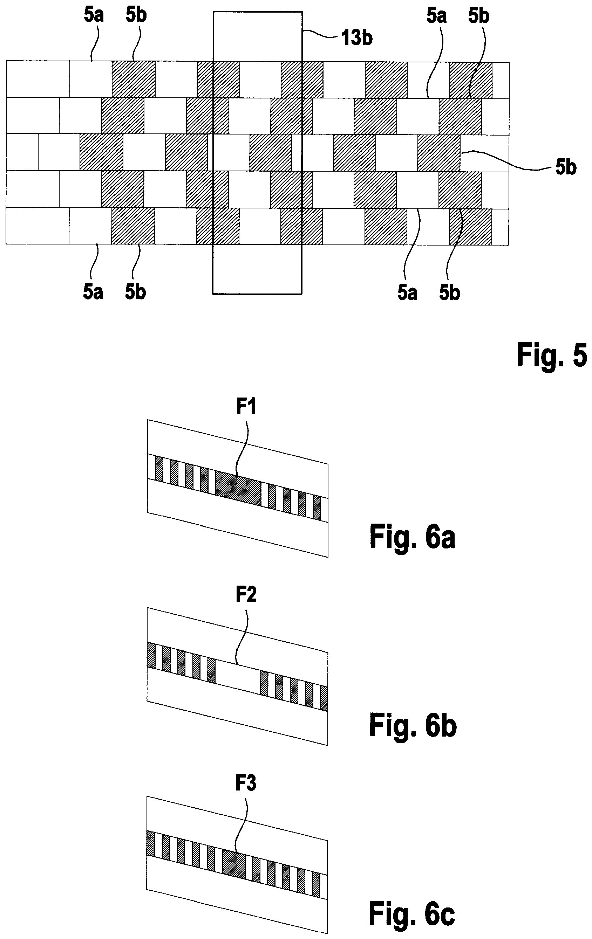

Figur 4 zeigt einen Reflektor 5 mit einem Reflektormuster, das aus einer einreihigen Anordnung von spiegelnd reflektierenden Segmenten 5a und lichtabsorbierenden Segmenten 5b. In Figur 4 ist mit Z der auf eine Zeile der matrixförmigen Kamera 4 abgebildete Bildausschnitt dargestellt. Figur 5 zeigt einen Reflektor 5 mit einem mehrzeiligen Reflexionsmuster. Jede Zeile des Reflektormusters wird selektiv auf eine oder mehrere Zeilen der Kamera 4 abgebildet, das heißt im Empfänger erfolgt eine Mehrfachzeilenauswertung zur Erfassung des Reflektormusters. Die korrespondierenden spiegelnd reflektierenden Segmente 5a, beziehungsweise lichtabsorbierenden Segmente 5b, sind von einer Zeile zur nächsten um einen Versatz zueinander verschoben, der jeweils kleiner ist als die Breite des spiegelnd reflektierenden Segments 5a beziehungsweise lichtabsorbierenden Segments 5b. Insgesamt bilden dabei die spiegelnd reflektierenden Segmente 5a beziehungsweise lichtabsorbierende Segmente 5b der einzelnen Zeilen V-förmige Muster, um zu schützende Objekte aus unterschiedlichen Eintrittsrichtungen im Schutzfeld zu erkennen.

Mit der Mehrfachzeilenauswertung gemäß Figur 5 können bei gleicher Ausbildung der Kamera 4 kleinere Objektstrukturen erfasst werden als bei der Einfachzeilenauswertung gemäß Figur 4. Dies ist in den Figuren 4 und 5 anhand von Abschattungsflächen 13a, 13b dargestellt. Die Abschattungsflächen 13a, 13b zeigen den Bereich der Lichtline 3, der von einem vor dem Reflektor 5 angeordneten Objekt unterbrochen wird und damit nicht mehr zum Reflektor gelangt. Die Abschattungsfläche 13a in Figur 4 entspricht der kleinsten noch mit dem einseitigen Reflektormuster erfassbaren Objektgröße, da dort gerade zwei lichtabsorbierende Segmente 5b innerhalb Abschattungsfläche 13a liegen, das heißt nicht mehr auf die Kamera abgebildet werden. Wie Figur 5 zeigt, können mit der Mehrfachzeilenauswertung und dem mehrzeiligen Reflektormuster noch kleinere Objektstrukturen innerhalb der kleineren Abschattungsfläche 13b erfasst werden.

Die Figuren 1 sowie 6a bis 6c zeigen das Prinzip der Objekterfassung mit dem optischen Sensor. Das Schutzfeld, innerhalb dessen Objekte erfasst werden können, setzt sich zusammen aus einem Bereich A und zwei angrenzenden Bereichen B. Der Bereich A entspricht dem Sichtbereich der Kamera 4. In diesem Bereich können Objekte direkt erfasst werden. Dies zeigen die Figuren 6a und 6b. Figur 6a zeigt das Kamerabild der Kamera 4 des optischen Sensors bei der Detektion des im Bereich A angeordneten Gegenstands G1 für den Fall, dass dieser eine nicht reflektierende Fläche aufweist. In diesem Fall wird der Gegenstand G1 allein anhand der von diesem abgeschatteten Teile des Reflektormusters des Reflektors 5 erkannt, das heißt der Gegenstand G1 unterbricht die Lichtline, so dass nicht mehr alle spiegelnd reflektierende Segmente 5a des Reflektors 5 auf die Kamera 4 abgebildet werden, das heißt der Gegenstand G1 erscheint als dunkle Fläche F1 auf der Kamera 4.

Figur 6b zeigt den Fall, dass der Gegenstand G1 das Licht an Beleuchtungseinheit 2 zurück in die Kamera 4 reflektiert. Eine derartige Reflexion des Lichts in die Kamera 4 erfolgt deshalb, da sich der Gegenstand G1 innerhalb des Sichtbereichs der Kamera 4 befindet. Damit wird auf dem Kamerabild eine entsprechend helle Fläche F2 durch den Gegenstand G1 erzeugt, die gleichgroß wie die Fläche F1 ist.

Ein in einem der Bereiche B angeordneter Gegenstand G2 kann dagegen nicht durch eine Detektion des von diesem Gegenstand G2 zurückreflektierten Licht der Beleuchtungseinheit 2 erfasst werden, da sich hier der Gegenstand G2 außerhalb des Sichtbereichs der Kamera 4 befindet. Jedoch bewirkt auch in diesem Fall der Gegenstand G2 unabhängig davon, ob dieser reflektierend ist oder nicht, eine Unterbrechung der Lichtlinie, so dass nicht mehr alle spiegelnd reflektierenden Segmente 5a des Reflektors 5 auf die Kamera 4 abgebildet werden. Durch die Rückreflexion des Lichts am Reflektor 5 wird diese Abschattung in den Sichtbereich der Kamera 4 gefaltet, so dass der Gegenstand G2 durch die entsprechende dunkle Fläche F3 auf dem Kamerabild erkennbar ist (Figur 6c), die bei gleicher Objektgröße durch den doppelten Abstand zur Kamera 4 halb so groß wie die Flächen F1 beziehungsweise F2 ist.

Wie Figur 1 zeigt, wird bereits mit nur einer Kamera 4 als Empfänger ein annähernd rechteckiges Schutzfeld, bestehend aus der Summe der Bereiche A und B realisiert werden.

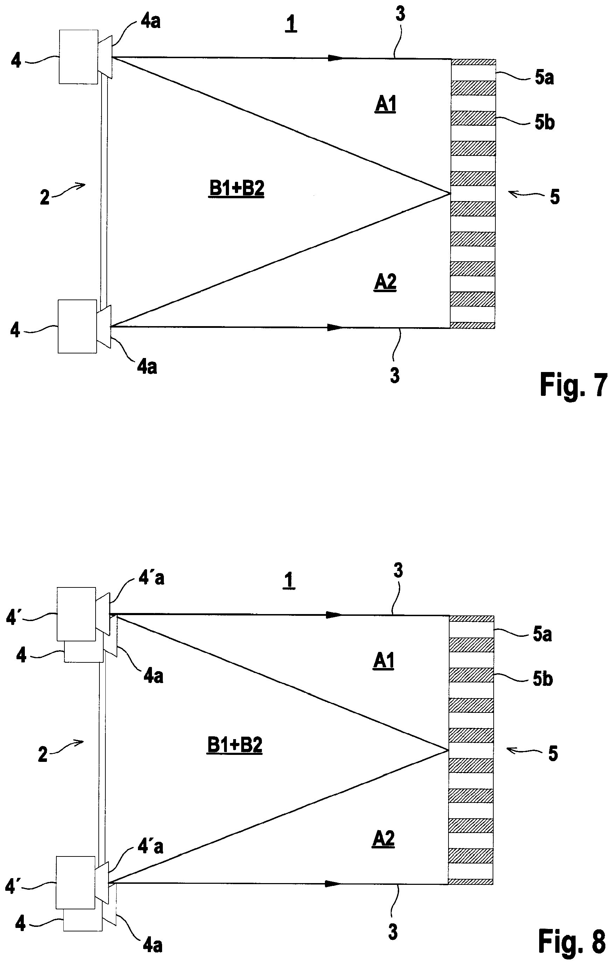

Figur 7 zeigt eine Weiterbildung des optischen Sensors 1 gemäß Figur 1 dahingehend, dass anstelle einer Kamera 4 im Zentrum der Beleuchtungseinheit 2 nun zwei Kameras 4, 4' vorgesehen sind, wobei jeweils eine Kamera 4, 4' an einem längsseitigen Ende der Beleuchtungseinheit 2 vorgesehen ist. Jeder Kamera 4, 4' ist ein Kameraobjektiv 4a, 4a' vorgeordnet. Ansonsten entspricht der optische Sensor 1 gemäß Figur 7 hinsichtlich Aufbau und Funktion dem optischen Sensor 1 gemäß Figur 1.

Durch die Anordnung der Kameras 4, 4' an den Enden der Beleuchtungseinheit 2 wird ein exakt rechteckiges Schutzfeld realisiert, welches aus der Summe der Bereiche A1, A2 sowie B1 + B2 besteht. Der Bereich A1 liegt im Sichtbereich der ersten Kamera 4. Damit können mit dieser ersten Kamera 4 Objekte, die sich im Bereich A1 befinden, durch direkt von den Objekten auf diese Kamera 4 zurückreflektiertes Licht detektiert werden. Entsprechendes gilt für den Bereich A2, der im Sichtbereich der zweiten Kamera 4' liegt. Der Bereich B1 + B2 liegt außerhalb der Sichtbereiche der beiden Kameras 4, 4'. Dort angeordnete Objekte können, analog zu Objekten im Bereich B bei dem Sensor gemäß Figur 1, nur indirekt über die Abschattungen des Reflektormusters erfasst werden.

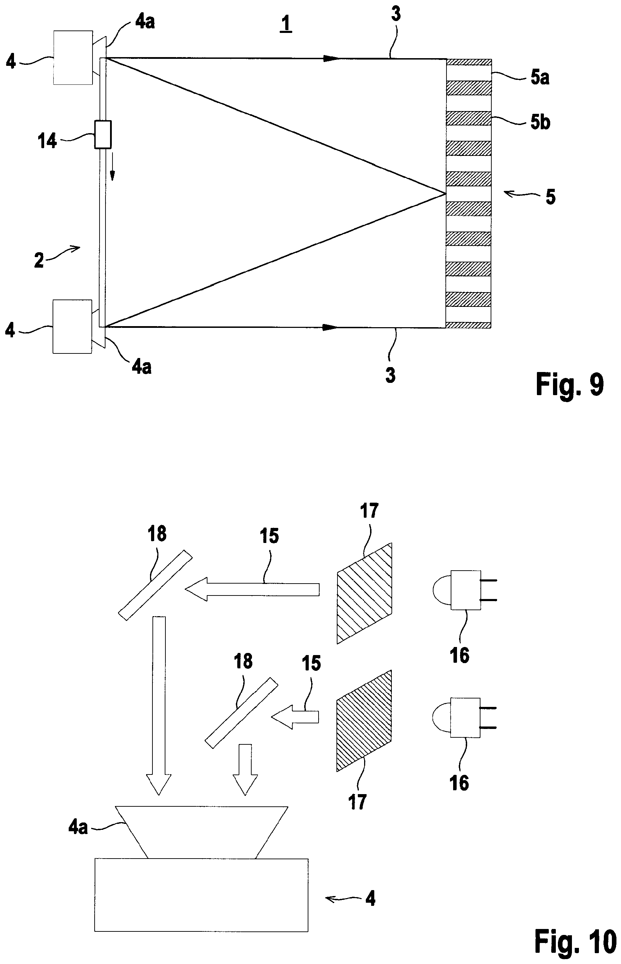

Figur 8 zeigt eine Weiterbildung der Ausführungsform gemäß Figur 7. Der optische Sensor 1 gemäß Figur 9 ist gegenüber der Ausführungsform der Figur 7 dahingehend erweitert, dass an den Enden der Beleuchtungseinheit 2 nicht nur eine Kamera 4 vorgesehen ist. Vielmehr sind dort zwei identische Kameras 4, 4' vorgesehen, mittels derer eine mehrkanalige Kamerastruktur erzielt wird. Mit den Kameras 4, 4' an jedem längsseitigen Ende der Beleuchtungseinheit 2 wird exakt dasselbe Sichtbereich erfasst. Hierzu können den Kameras 4, 4' geeignete Umlenkmittel vorgeordnet sein, mittels derer einfallendes Licht den Kameras 4, 4' in gleicher Weise zugeführt wird. Jeder Kamera 4 beziehungsweise 4' ist ein Kameraobjektiv 4a beziehungsweise 4a' vorgeordnet. Zur Fehlerkontrolle und zur Erzielung des für den Einsatz im Bereich der Sicherheitstechnik erforderlichen Sicherheitsniveaus werden die Bilder der Kameras 4, 4' oder aus den Bildern generierte Merkmale fortlaufend miteinander verglichen. Eine entsprechende mehrkanalige Kamerastruktur kann auch bei der Ausführungsform gemäß Figur 1 vorgesehen sein.

Figur 9 zeigt eine erste Ausführungsform zur Testung der Kameras 4, 4' des optischen Sensors 1 gemäß Figur 7. Als Mittel zur Testung ist für die Beleuchtungseinheit 2 ein zyklisch über die Länge der Beleuchtungseinheit 2 durchlaufender Dunkelbereich 14 vorgesehen. Der Dunkelbereich 14 kann beispielsweise durch ein serielles Dunkelschalten von Dioden, welche die Lichtline erzeugen, generiert werden.

Durch den durchlaufenden Dunkelbereich 14 entstehen in den Kameras 4, 4' definierte, zeitlich variierende Testbilder, die mit Sollwerten zur Überprüfung der Kamera 4 in der Auswerteeinheit verglichen werden.

Figur 10 zeigt eine weitere Möglichkeit einer Testung der oder einer Kamera 4 des erfindungsgemäßen optischen Sensors 1. In diesem Fall werden über Testlichtstrahlen 15 emittierende Testsender 16 und nachgeordnete optische Muster 17 sowie Umlenkspiegel 18 zu vorgegebenen Zeiten Testmuster auf die Kamera 4 projiziert. Die dabei erhaltenen Kamerabilder oder aus diesen generierten Merkmale werden mit definierten Sollwerten zur Testung der Kamera 4 verglichen.

Bei sämtlichen Ausführungsformen des optischen Sensors 1 ist jeder Empfänger bestehend aus einer Kamera 4 und einem Kameraobjektiv 4a so ausgebildet, dass der Reflektor 5 in unterschiedlichen Abständen zum Empfänger vollständig auf die Kamera 4 abgebildet wird, so dass das Reflektormuster des Reflektors 5 vollständig erfasst werden kann.

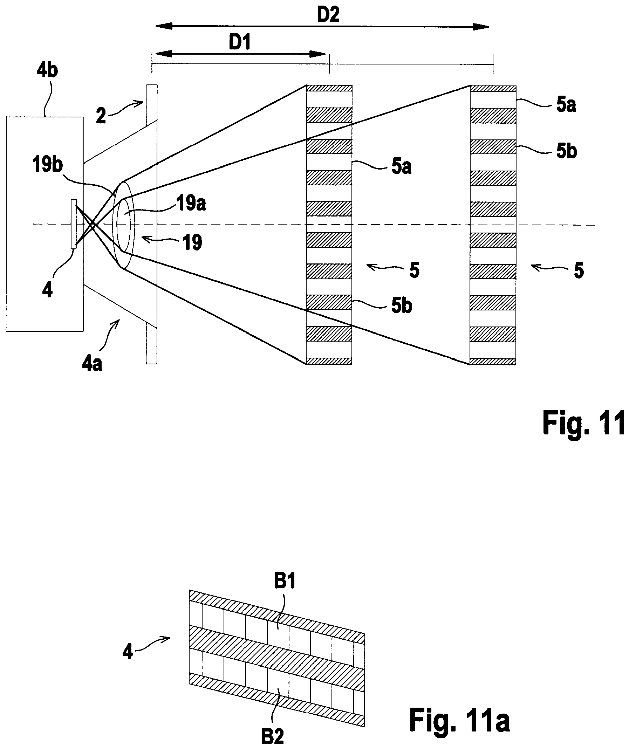

Figur 11 zeigt ein Ausführungsbeispiel eines derartigen Empfängers. Die Kamera 4 ist in einem Kameragehäuse 4b untergebracht. Das der Kamera 4 vorgeordnete Kameraobjektiv 4a umfasst eine Mehrzonenlinse 19 mit mehreren, unterschiedlichen Öffnungswinkeln beziehungsweise Brennweiten aufweisenden Zonen. Die Mehrzonenlinse 19 umfasst in der Mitte eine Fernbereichszone 19a und im Außenbereich eine Nahbereichszone 19b.

Ist der Reflektor 5 im Nahbereich angeordnet, das heißt im Beispiel der Figur 11 in einem Abstand D1 zur Beleuchtungseinheit 2, so wird das Licht der Beleuchtungseinheit 2 nach Reflexion am Reflektor 5 über die Nahbereichszone 19b der Mehrzonenlinse 19 auf die Kamera 4 abgebildet. Ist dagegen der Reflektor 5 im Fernbereich angeordnet, das heißt im Beispiel von Figur 11 in einem Abstand D2 zur Beleuchtungseinheit 2, so wird das Licht der Beleuchtungseinheit 2 über die Fernbereichszone 19a der Mehrzonenlinse 19 auf die Kamera 4 abgebildet. Wesentlich hierbei ist einerseits, dass unabhängig davon, ob der Reflektor 5 im Nahbereich oder Fernbereich angeordnet ist, dessen Reflektormuster immer vollständig auf der Kamera 4 abgebildet und somit von dieser erfasst wird. Damit kann zur Veränderung des Schutzfelds die Reflektorposition applikationsspezifisch verändert werden.

Weiterhin ist wesentlich, dass das Reflektormuster je nachdem, ob der Reflektor 5 im Nahbereich oder Fernbereich angeordnet ist, auf unterschiedliche Bereiche der matrixförmigen Anordnung der Empfangselemente der Kamera 4 abgebildet wird. Dies ist in Figur 11a veranschaulicht, welche eine Draufsicht auf die lichtempfindliche Fläche der Kamera 4 zeigt. Ist der Reflektor 5 in der Distanz D1 zur Kamera 4 angeordnet, wird dessen Reflektormuster auf den Bereich B1 der lichtempfindlichen Fläche der Kamera 4 abgebildet. Ist der Reflektor 5 in der Distanz D2 zur Kamera 4 angeordnet, wird dessen Reflektormuster auf den Bereich B2 der lichtempfindlichen Fläche der Kamera 4 abgebildet. Damit wird eine hohe Störsignalfestigkeit erreicht, da Störlichteinstrahlungen nicht auf den Bereich der Kamera 4 abgebildet werden, auf welchen der Reflektor 5 abgebildet wird, so dass die Abbildung des Reflektormusters durch Störlichteinstrahlungen nicht gestört wird.

Anstelle der in Figur 11 dargestellten Mehrzonenlinse 19 kann das Kameraobjektiv 4a auch ein Mikrolinsenarray aufweisen, welches dieselbe Funktionalität wie die Mehrzonenlinse 19 aufweist.

**Bezugszeichenliste**

| | | |
|---|---|---|
| (1) | optischer Sensor | (18a) Fernbereichszone |
| (2) | Beleuchtungseinheit | (18b) Nahbereichszone |
| (3) | Lichtlinie | Gegenstand G1, G2 |
| (4) | Kamera | Fläche F1 bis F3 |
| (4') | Kamera | Bereich A, B |
| (4a) | Kameraobjektiv | |
| (4a') | Kameraobjektiv | |
| (4b) | Kameragehäuse | |
| (5) | Reflektor | |
| (5a) | spiegelnd reflektierendes Segment | |
| (5b) | lichtabsorbierendes Segment | |
| (6) | Sensorgehäuse | |
| (7) | Sender | |
| (8) | Sendeoptik | |
| (9) | Lichtstrahlen | |
| (10) | Muster | |
| (11) | Lichtstab | |
| (12) | Auskoppelflächen | |
| (13a) | Abschattungsfläche | |
| (13b) | Abschattungsfläche | |
| (14) | Dunkelbereich | |
| (15) | Testlichtstrahlen | |
| (16) | Testsender | |
| (17) | optische Muster | |
| (18) | Mehrzonenlinse | |

## Patentansprüche

1. Optischer Sensor (1) zur Erfassung von Objekten innerhalb eines Schutzfelds, mit einer eine Lichtlinie (3) erzeugenden Beleuchtungseinheit (2) und einem der Beleuchtungseinheit (2) zugeordneten Empfänger an einem ersten Rand des Schutzfelds, wobei der Empfänger wenigstens eine Kamera (4) mit einem vorgeordneten Kameraobjektiv (4a) aufweist, mit einem an einem zweiten Rand des Schutzfelds angeordneten Reflektor (5), und mit einer Auswerteeinheit, in welcher in Abhängigkeit von Empfangssignalen des Empfängers ein Objektfeststellungssignal generiert wird, wobei der Reflektor (5) ein Reflektormuster aus spiegelnd reflektierenden Segmenten (5a) und lichtabsorbierenden Segmenten (5b) aufweist, wobei bei freiem Schutzfeld die Lichtlinie (3) der Beleuchtungseinheit (2) auf das Reflektormuster des Reflektors (5) trifft und von den spiegelnd reflektierenden Segmenten (5a) das Licht der Lichtlinie (3) zur wenigstens einen Kamera geführt wird, wobei der Empfänger dazu ausgebildet ist, dass in verschiedenen Abständen des Reflektors (5) dessen Reflektormuster vollständig auf die wenigstens eine Kamera (4) des Empfängers abgebildet wird, wobei die wenigstens eine Kamera (4) einen Teil des Schutzfelds abdeckenden Sichtbereich aufweist, wobei ein reflektierendes Objekt innerhalb des Sichtbereichs dadurch erfasst wird, dass an diesem reflektiertes Licht der Beleuchtungseinheit (2) direkt auf die mindestens eine Kamera (4) geführt ist, wobei ein nicht reflektierendes Objekt innerhalb des Sichtbereichs dadurch erfasst wird, dass dieses die Lichtlinie der Beleuchtungseinheit unterbricht, so dass nicht mehr von allen spiegelnd reflektierenden Segmenten (5a) des Reflektors (5) Licht zur mindestens einen Kamera (4) geführt wird, und wobei ein reflektierendes oder nicht reflektierendes Objekt, das außerhalb des Sichtbereichs jedoch innerhalb des Schutzfelds angeordnet ist, dadurch erfasst wird, dass dieses die Lichtlinie der Beleuchtungseinheit unterbricht, so dass nicht mehr von allen spiegelnd reflektierenden Segmenten (5b) des Reflektors (5) Licht zur mindestens einen Kamera (4) geführt wird, und wobei der optische Sensor (1) ein Sicherheitssensor ist, dessen Auswerteeinheit und dessen Empfänger einen mehrkanaligen Aufbau aufweisen, **dadurch gekennzeichnet, dass** ein mehrkanaliger Empfänger wenigstens zwei Kameras (4) aufweist, die denselben Sichtbereich überwachen, dass jeder Kamera (4) ein Kameraobjektiv (4a) in Form eines Weitwinkelobjektivs vorgeordnet ist, und dass jede Kamera (4) eine matrixförmige Anordnung von Empfangselementen derart aufweist, dass die Auflösung der Kamera (4) in ihren Außenbereichen geringer als in ihrem zentralen Bereich ist.

2. Optischer Sensor (1) nach Anspruch 1, **dadurch gekennzeichnet, dass** jede Kamera (4) eine gleichförmige matrixförmige Anordnung von Empfangselementen aufweist, und dass jeder Kamera (4) ein Kameraobjektiv (4a) zugeordnet ist, welches mehrere Zonen mit unterschiedlichen Öffnungswinkeln aufweist.

3. Optischer Sensor (1) nach Anspruch 2 , **dadurch gekennzeichnet, dass** jedes Kameraobjektiv (4a) von einem Mikrolinsenarray gebildet ist, welche mehrere Bereiche mit unterschiedlichen Öffnungswinkeln aufweist.

4. Optischer Sensor (1) nach einem der Ansprüche 1 bis 3, **dadurch gekennzeichnet, dass** Ausrichtmittel vorgesehen sind, mittels derer die Beleuchtungseinheit (2) und die wenigstens eine Kamera (4) relativ zum Reflektor (5) justiert werden.

5. Optischer Sensor (1) nach Anspruch 4 , **dadurch gekennzeichnet, dass** als Ausrichtmittel wenigstens ein Ausrichtlaser und eine Markierung vorgesehen sind, welche der Beleuchtungseinheit (2) und der Kamera (4) zugeordnet sind, wobei vom Ausrichtlaser emittierten Laserlicht vom Reflektor (5) reflektiert und auf die Markierung geführt ist, wo dieses Laserlicht sichtbar ist.

6. Optischer Sensor (1) nach Anspruch 5, **dadurch gekennzeichnet, dass** für den Fall, dass das Laserlicht im sichtbaren Bereich liegt, eine lichtverstärkende Markierung vorgesehen ist, und für den Fall, dass das Laserlicht im nicht sichtbaren Bereich lieg, eine das Laserlicht in den sichtbaren Bereich verschiebende Markierung vorgesehen ist.

## Claims

1. Optical sensor (1) for detecting objects within a protective field, having an illumination unit (2) generating a light line (3) and a receiver associated with the illumination unit (2) at a first edge of the protective field, the receiver having at least one camera (4) with a camera lens (4a) arranged in front of it, having a reflector (5) arranged at a second edge of the protective field, and having an evaluation unit in which an object detection signal is generated as a function of received signals from the receiver,
wherein the reflector (5) has a reflector pattern of specularly reflecting segments (5a) and light absorbing segments (5b),
wherein with a free protective field, the light line (3) of the lighting unit (2) strikes the reflector pattern of the reflector (5) and the light of the light line (3) is guided by the specularly reflecting segments (5a) to at least one camera,
wherein the receiver is designed so that at different distances of the reflector (5) its reflector pattern is completely imaged onto the at least one camera (4) of the receiver,
wherein the at least one camera (4) has a field of view covering part of the protective field,
wherein a reflecting object within the field of view is detected by the fact that light of the illumination unit (2) reflected thereon is guided directly onto the at least one camera (4),
wherein a non-reflecting object is detected in the vicinity of the field of view by interrupting the light line of the lighting unit so that light is no longer guided from all specularly reflecting segments (5a) of the reflector (5) to the at least one camera (4), and
wherein a reflective or non-reflective object, which is arranged outside the field of view but within the protective field, is detected by the fact that it interrupts the light line of the lighting unit so that light is no longer guided from all specularly reflective segments (5b) of the reflector (5) to the at least one camera (4), and
wherein the optical sensor (1) is a safety sensor whose evaluation unit and its receiver have a multi-channel structure,
**characterised in that** a multi-channel receiver comprises at least two cameras (4) which monitor the same field of view,
**in that** a camera lens (4a) in the form of a wide-angle lens is arranged upstream of each camera (4), and **in that** each camera (4) has a matrix-like arrangement of receiving elements in such a way that the resolution of the camera (4) is lower in its outer regions than in its central region.

2. Optical sensor (1) according to Claim 1, **characterised in that** each camera (4) has a uniform matrix-shaped arrangement of receiving elements, and **in that** each camera (4) is assigned a camera lens (4a) which has several zones with different angles of aperture.

3. An optical sensor (1) according to claim 2, **characterised in that** each camera lens (4a) is formed by a microlens array having a plurality of regions with different angles of aperture.

4. Optical sensor (1) according to one of claims 1 to 3, **characterised in that** alignment means are provided by means of which the lighting unit (2) and the at least one camera (4) are adjusted relative to the reflector (5).

5. Optical sensor (1) according to claim 4, **characterised in that** at least one alignment laser and a marking are provided as alignment means, which are associated with the illumination unit (2) and the camera (4), laser light emitted by the alignment laser being reflected by the reflector (5) and guided onto the marking where this laser light is visible.

6. Optical sensor (1) according to claim 5, **characterised in that** a light-amplifying mark is provided in the case where the laser light is in the visible range, and a mark is provided in the case where the laser light is in the nonvisible range, which shifts the laser light into the visible range.

## Revendications

1. Capteur optique (1) pour la détection d'objets à l'intérieur d'un champ de protection, avec une unité d'éclairage (2) générant une ligne lumineuse (3) et un récepteur associé à l'unité d'éclairage (2) sur un premier bord du champ de protection, le récepteur présentant au moins une caméra (4) avec un objectif de caméra (4a) disposé devant elle, avec un réflecteur (5) disposé sur un deuxième bord du champ de protection et avec une unité d'évaluation dans laquelle un signal de détection d'objet est généré en - fonction des signaux reçus du récepteur,
dans lequel le réflecteur (5) présente un motif de réflexion composé de segments réfléchissants spéculaires (5a) et de segments absorbant la lumière (5b),
dans lequel, avec un champ de protection libre, la ligne lumineuse (3) de l'unité d'éclairage (2) frappe le motif du réflecteur (5) et la lumière de la ligne lumineuse (3) est guidée par les segments à réflexion spéculaire (5a) vers au moins une caméra,
dans lequel le récepteur est conçu de telle sorte qu'à différentes distances du réflecteur (5), son motif de réflexion est complètement imagé sur au moins une caméra (4) du récepteur,
dans lequel la ou les caméras (4) ont un champ de vision couvrant une partie du champ de protection,
dans lequel un objet réfléchissant dans le champ de vision est détecté par le fait que la lumière de l'unité d'éclairage (2) qui y est réfléchie est guidée directement sur la ou les caméras (4),
dans lequel un objet non réfléchissant est détecté à proximité du champ de vision en interrompant la ligne lumineuse de l'unité d'éclairage de sorte que la lumière n'est plus guidée de tous les segments à réflexion spéculaire (5a) du réflecteur (5) vers la ou les caméras (4), et
dans lequel un objet réfléchissant ou non réfléchissant, qui est disposé en dehors du champ de vision mais à l'intérieur du champ de protection, est détecté par le fait qu'il interrompt la ligne lumineuse de l'unité d'éclairage de sorte que la lumière n'est plus guidée de tous les segments (5b) réfléchissants spéculaires du réflecteur (5) vers la ou les caméras (4), et
dans lequel le capteur optique (1) est un capteur de sécurité dont l'unité d'évaluation et son récepteur ont une structure multicanaux,
**caractérisé en ce qu'**un récepteur multicanal comprend au moins deux caméras (4) qui surveillent le même champ de vision,
**en ce qu'**un objectif de caméra (4a) sous forme d'objectif grand angle est disposé en amont de chaque caméra (4), et **en ce que** chaque caméra (4) présente un agencement matriciel d'éléments récepteurs de telle sorte que la résolution de la caméra (4) est plus faible dans ses zones extérieures que dans sa zone centrale.

2. Capteur optique (1) selon la revendication 1, **caractérisé en ce que** chaque caméra (4) présente un agencement uniforme en forme de matrice d'éléments récepteurs, et **en ce qu'**à chaque caméra (4) est associé un objectif de caméra (4a) qui présente plusieurs zones avec des angles d'ouverture différents.

3. Capteur optique (1) selon la revendication 2, **caractérisé en ce que** chaque objectif de caméra (4a) est formé par un réseau de microlentilles ayant une pluralité de régions avec différents angles d'ouverture.

4. Capteur optique (1) selon l'une des revendications 1 à 3, **caractérisé en ce que** des moyens d'alignement sont prévus, à l'aide desquels l'unité d'éclairage (2) et la ou les caméras (4) sont réglées par rapport au réflecteur (5).

5. Capteur optique (1) selon la revendication 4, **caractérisé en ce qu'**il est prévu comme moyens d'alignement au moins un laser d'alignement et un marquage, qui sont associés à l'unité d'éclairage (2) et à la caméra (4), la lumière laser émise par le laser d'alignement étant réfléchie par le réflecteur (5) et guidée sur le marquage où cette lumière laser est visible.

6. Capteur optique (1) selon la revendication 5, **caractérisé en ce qu'**une marque amplificatrice de lumière est prévue dans le cas où la lumière laser se trouve dans la plage visible, et une marque est prévue dans le cas où la lumière laser se trouve dans la plage nonvisible, qui déplace la lumière laser dans la plage visible.
